# EUROPÄISCHE PATENTSCHRIFT

(11) **EP 0 728 038 B1**
(45) Veröffentlichungstag und Bekanntmachung des Hinweises auf die Patenterteilung: **08.07.1998**
(21) Anmeldenummer: 95901370.7
(22) Anmeldetag: 11.11.1994
(51) Int. Cl.: B01J 19/12, B01J 3/04, H05B 6/80, G01N 1/44

(54) **VORRICHTUNG ZUM AUSLÖSEN UND/ODER FÖRDERN CHEMISCHER ODER PHYSIKALISCHER PROZESSE IN EINEM MATERIAL, INSBESONDERE PROBENMATERIAL**
DEVICE FOR INITIATING AND/OR FURTHERING CHEMICAL OR PHYSICAL PROCESSES IN A MATERIAL, ESPECIALLY SAMPLE MATERIAL
DISPOSITIF PERMETTANT DE DECLENCHER ET/OU D'ACTIVER DES PROCESSUS CHIMIQUES OU PHYSIQUES DANS UN MATERIAU, NOTAMMENT UN MATERIAU D'ECHANTILLONNAGE

(30) Priorität: 11.11.1993 DE 4338583; 03.06.1994 DE 4419590
(43) Veröffentlichungstag der Anmeldung: 28.08.1996
(73) Patentinhaber: LAUTENSCHLÄGER, Werner, D-88200 Leutkirch (DE)
(72) Erfinder: LAUTENSCHLÄGER, Werner, D-88200 Leutkirch (DE)
(74) Vertreter: Schmidt-Evers, Jürgen, Dipl.-Ing.
(86) Internationale Anmeldenummer: EP9403742
(87) Internationale Veröffentlichungsnummer: WO9513133

(56) Entgegenhaltungen:
- EP-A- 0 416 759
- EP-A- 0 569 265
- DE-A- 3 141 939
- DE-A- 4 038 273
- DE-A- 4 102 129
- DE-A- 4 114 525
- GB-A- 2 102 402
- ANALYTICAL CHEMISTRY, Bd.66, Nr.7, April 1994, COLUMBUS US Seiten 1097 - 1106 V. LOPEZ-AVILA ET AL. 'Microwave-Assisted Extraction of Organic Compounds from Standard Reference Soils ans Sediments'

## Beschreibung

Die Erfindung bezieht sich auf eine Vorrichtung nach dem Oberbegriff des Anspruchs 1.

Es ist in der analytischen Chemie und insbesondere zum Aufbereiten von Materialien, vorzugsweise Probenmaterialien, bzw. bei Umwandlung von Ausgangsstoffen zu Reaktionsprodukten üblich, die Behandlung unter Hitze und Druck (Überdruck) durchzuführen, weil sich unter diesen Bedingungen der angestrebte Prozeß überhaupt durchführen oder verbessern bzw. forcieren läßt. Bei einer in der

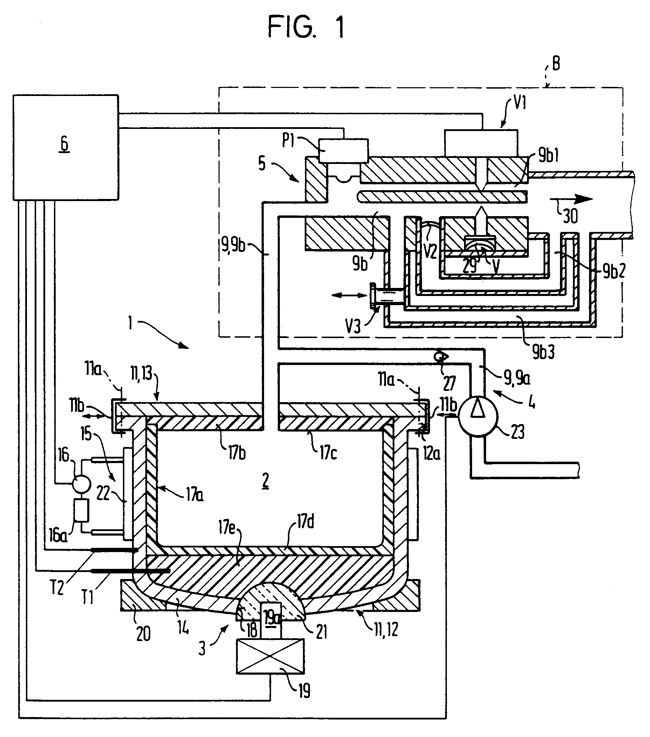

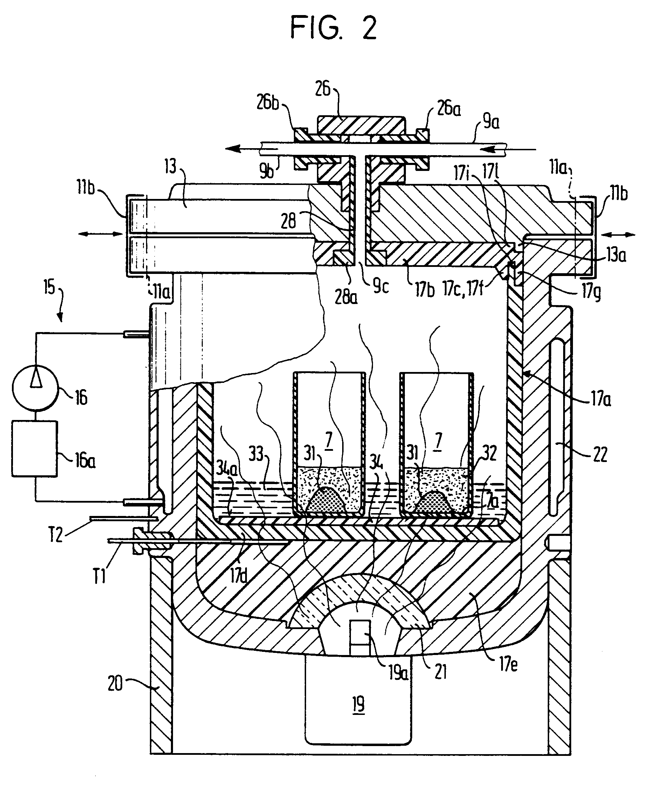

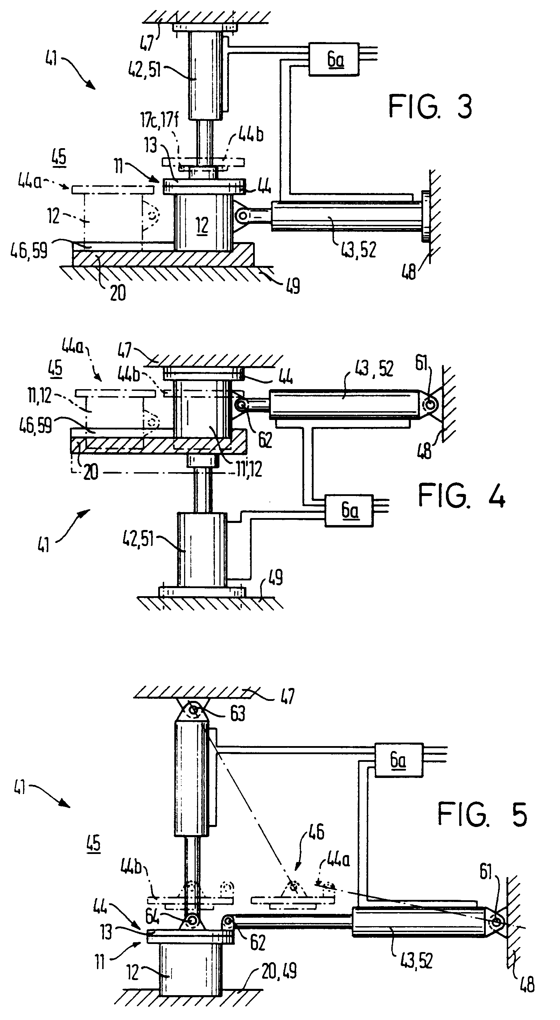

DE-A-39 33 992 beschriebenen Vorrichtung wird durch Bestrahlung eines unter Druck stehenden Gases mit langwelligen elektromagnetischen Wellen eine kurzwelligere Strahlung erzeugt, mit der die Ausgangsstoffe bestrahlt werden oder es werden die Ausgangsstoffe selbst unter Unterdruck gesetzt und direkt mit den langwelligen elektromagnetischen Wellen bestrahlt. Hierzu dient eine Vorrichtung mit einem allseitig von einem Gehäuse umgebenen und dicht verschließbaren Heizraum, in den ein in ein offenes oder verschließbares Aufnahmegefäß eingefüllter Ausgangsstoff unter Unterdruck erhitzbar ist, der durch eine Luftpumpe erzeugt wird, die durch eine Entlüftungsleitung mit dem Heizraum (Fig. 1 und 4) oder bei einem verschließbaren Aufnahmebehälter mit dem Aufnahmebehälter verbunden ist (Fig. 2 und 3 dieser Druckschrift).

Aus der DE 40 38 273 A1 ist eine Vorrichtung der eingangs angegebenen Arten in mehreren Ausgestaltungen zu entnehmen, bei denen zwecks Öffnung eines die Reaktionskammer umgebenden Gehäuses dessen Seitenwand (Fig. 1), Deckel (Fig. 2) oder Boden (Fig. 3) jeweils mittels einer Verstellvorrichtung zwischen der Verschlußstellung und einer Offenstellung verstellbar ist. Dabei ist am jeweils zu öffnenden Wandteil des Gehäuses eine Halterung, z.B. eine Standplatte, für wenigstens einen Probenbehälter angeordnet, so daß letzterer mit der jeweiligen Verstellbewegung des Wandteiles in die Reaktionskammer, bzw. aus dieser heraus bewegt werden kann. Hierdurch ist zwar das Einstellen und Herausnehmen wenigstens eines Probenbehälters in die Reaktionskammer bzw. in das Gehäuse erleichtert, jedoch ist eine besondere Halterung für den wenigstens einen Probenbehälter erforderlich. Es ist auch ein einfaches Aufstellen des oder der Probenbehälter auf den Gehäuseboden nicht möglich. Ferner ist diese bekannte Vorrichtung sowohl wegen des Vorhandenseins der Halterung als auch aus weiteren konstruktiven Gründen nicht so eingerichtet, das Probenmaterial unmittelbar in das Gehäuse, d.h. ohne einen besonderen Probenbehälter, eingegeben werden kann. Ein weiterer Nachteil der bekannten Vorrichtung ist darin zu sehen, daß bei der Ausgestaltung mit einem abhebbaren Deckel für die Reaktionskammer (Fig. 2) die Zugänglichkeit zur Reaktionskammer in der Offenstellung sehr eingeschränkt ist, weil der Deckel vom Gehäuse zwar abgehoben ist, jedoch aufgrund seiner sich über dem Gehäuse befindlichen Stellung den Zugang zur oberseitigen Gehäuseöffnung erschwert.

Aus der WO/93/22650 ist eine Vorrichtung der vorliegenden Art in mehreren Ausgestaltungen zu entnehmen, bei denen zur Aufnahme mehrerer topfförmiger Probenbehälter ein Halter in Form eines Rotors in einer Reaktionskammer vorgesehen ist, wobei der Probenbehälter durch eine horizontalen Bewegung zwischen eine den Probenbehälter untergreifende Standplatte und einen den Probenbehälter mit seiner oberseitigen Öffnung übergreifenden und dabei verschließenden Deckel einschiebbar ist. Letzterer ist ein Teil des Halters, der bei der Entnahme des Probenbehälters am Halter verbleibt. Bei dieser bekannten Vorrichtung ist es erforderlich, den Probenbehälter beim Einschieben bzw. Herausziehen aus dem Halter manuell zu ergreifen, was insbesondere nach der Materialbehandlung bereits wegen der erhöhten Temperatur nur erschwert möglich ist. Darüberhinaus ist zu berücksichtigen, daß der Probenbehälter gezielt in den Halter eingeführt werden muß. Ferner eignet sich diese bekannte Vorrichtung nicht für eine Reaktionskammer größerer Abmessung, weil eine manuelle Handhabung wegen des sich ergebenden Gewichtes nicht möglich ist. Sofern mehrere Probenmaterialien gleichzeitig behandelt werden sollen, sind deshalb bei dieser bekannten Ausgestaltung mehrere Probenbehälter erforderlich, die jeweils mit einer horizontalen Bewegung gezielt in ihre Arbeitsstellung eingestellt und nach der Behandlung wieder entnommen werden müssen.

Der Erfindung liegt im weiteren die Aufgabe zugrunde, eine Vorrichtung der eingangs angegebenen Art so auszugestalten, daß eine einfacherere Beschickung der Reaktionskammer möglich ist.

Diese Aufgabe wird durch die Merkmale des Anspruches 1 gelöst.

Bei dieser erfindungsgemäßen Ausgestaltung ist das die Reaktionskammer umschließende Gehäuseunterteil oder dessen Deckel nicht nur mittels einer Hubvorrichtung in eine Öffnungs-Bereitschaftsstellung verstellbar, sondern es ist das Gehäuseunterteil oder der Deckel auch etwa horizontal in eine Beschickungsstellung und wieder zurück verstellbar, wodurch die Zugänglichkeit zur Reaktionskammer wesentlich verbessert wird und somit das Probenmaterial oder Probenmaterialien direkt oder in Probenbehältern in einfacher und handhabungsfreundlicher Weise in die Reaktionskammer eingestellt werden können. Dabei kann die Verstellung des Deckels oder des Gehäuseunterteils manuell oder durch einen Motorantrieb erfolgen. Zur etwa vertikalen Verstellung des Deckels oder des Gehäuseunterteils ist ein Motorantrieb von Vorteil, weil das jeweils vorhandene Gewicht überwunden werden muß. Außerdem kann eine solche Verstellvorrichtung zugleich die Verschlußvorrichtung für das Gehäuse bilden. Für die etwa horizontale Verstellung des Deckels oder des Gehäuseunterteils ist eine manuelle Verschiebung in einer Führung zwecks Vereinfachung der Vorrichtung und ihrer Steuerung vorteilhaft.

In den Unteransprüchen sind Merkmale enthalten, die zur Lösung der Aufgabe beitragen, die Bauweise vereinfachen, eine einfachere, schnellere und somit kostengünstiger durchführbare sowie sichere Behandlung ermöglichen, den Energieverbrauch und den Energiehaushalt verbessern und eine vorteilhalte und dabei sichere Steuerung des Behandlungsprozesses ermöglichen.

Die Erfindung bezieht sich im weiteren auf eine besondere Bauweise der Vorrichtung, die sich nicht nur durch eine einfache und kostengünstige sowie kleine Baugröße und eine bequeme Handhabung auszeichnet, sondern die auch eine hohe Ausnutzung der Heizenergie gewährleistet und somit preiswert und sicher betrieben werden kann.

Darüber hinaus bezieht sich die Erfindung auf eine vorteilhafte Bauweise, bei der die Drucksteuerungselemente der Vorrichtung in einen besonderen, von der Reaktionskammer getrennten Bauteil angeordnet sind, das lediglich durch eine Verbindungsleitung mit der Reationskammer verbunden sein kann, und auf vorteilhafte Anordnungen von Drucksteuerelementen wie Ventilen, die einen störungsfreien und sicheren Prozeßanlauf gewährleisten.

Nachfolgend werden die Erfindung und weitere durch sie erzielbare Vorteile anhand bevorzugter Ausführungsbeispiele und einer Zeichnung näher erläutert. Es zeigt
- Fig. 1: eine erfindungsgemäße Vorrichtung in weitgehend schematischer Schnitt-Seitenansicht;
- Fig. 2: ein Ausführungsbeispiel der Reaktionskammer der Vorrichtung im Vertikalschnitt und in vergrößerter Darstellung;
- Fig. 3 bis 5: jeweils eine erfindungsgemäße Vorrichtung in abgewandelter Ausgestaltung in schematischer Ansicht bei horizontaler Blickrichtung;
- Fig. 6: eine prinzipiell der Vorrichtung nach Fig. 3 entsprechende erfindungsgemäße Vorrichtung in einem Gerät in perspektivischer Vorderansicht, teilweise geschnitten;
- Fig. 7: einen vertikalen Teilschnitt des Gerätes im Bereich der Reaktionskammer.

Die Hauptteile der allgemein mit 1 bezeichneten Vorrichtung sind die Reaktionskammer 2, eine Heizvorrichtung 3, insbesondere Mikrowellen-Heizvorrichtung, für die Reaktionskammer 2, eine Druck-Ladevorrichtung 4 für die Reaktionskammer 2, ein Druck-Steuerblock 5 zur Steuerung des Druckes in der Reaktionskammer 2 und eine Steuereinrichtung 6 zur fünktionellen Steuerung der Vorrichtung 1, hier insbesondere der Heizvorrichtung 3 und der Druckbeaufschlagung, wobei die jeweils zugehörigen ansteuerbaren Steuerteile durch Steuerleitungen der Steuereinrichtung 6 verbunden sind.

Das zu behandelnde Material kann entweder direkt oder in einem oder in mehreren Aufnahmebehältern in die Reaktionskammer 2 eingegeben werden. Sofern ein oder mehrere Aufnahmebehälter 7 (Fig. 2) vorhanden sind, kann es aus handhabungstechnischen Gründen vorteilhaft sein, dem oder den Aufnahmebehältern 7 ein Traggestell insbesondere aus Kunststoff oder mikrowellendurchlässigem oder - teildurchlässigem Material zuzuordnen, mit dem sie handhabungsfreundlich in die Reaktionskammer 2 und wieder herausgestellt werden können.

Hierzu weist die Reaktionskammer 2 oberseitig eine Beschickungsöffnung zum Einführen und wieder Herausnehmen des zu behandelnden Materials auf.

Beim vorliegenden Ausführungsbeispiel ist die Vorrichtung 1 ein mit Hochtemperatur und Hochdrock funktionierender Mikrowellen-Autoklav zum Behandeln bzw. Aufbereiten von Materialien, insbesondere Probenmaterialien für Analysezwecke.

Es sind zur Steuerung des Druckes in der Reaktionskammer 2 mehrere Ventile vorgesehen, die in dem separat angeordneten Steuerblock 5 angeordnet sind, der durch eine Verbindungsleitung 9 mit der Reaktionskammer 2 verbunden ist, bei der es sich um eine starre oder flexible Rohrleitung oder eine Schlauchleitung insbesondere aus Kunststoff, handeln kann.

Die Reaktionskammer 2 ist von einem Gehäuse 11 umgeben, das zum Zweck der Beschickung der Reaktionskammer 2 vorzugsweise aus einem topfförmigen Gehäuseunterteil 12 mit einem Randflansch 12a und einem vorzugsweise im wesentlichen flachen, lösbar am Gehäuseunterteil 12 befestigbaren Deckel 13 gebildet ist. Die Befestigungsvorrichtung für den Deckel 13 am Gehäuseunterteil 12 ist aus Vereinfachungsgründen nicht dargestellt. Es kann sich um andeutungsweise dargestellte Schrauben 11a oder um gegenüberliegend angeordnete Verschlußringhälften 11b U-förmigen Querschnitts handeln, die horiziontal einander entgegengesetzt zwischen einer dargestellten Verschlußstellung, in der sie den Deckel 13 und den Randflansch 12a über- und untergreifen und einer nicht dargestellten, nach außen versetzen Freigabestellung von Hand oder durch einen Motorantrieb bewegbar sind.

Das Gehäuse 11 ist ein Metallgehäuse. Die Mikrowellen-Einkopplung in das Gehäuse 11 erfolgt von unten durch ein am vorzugsweise nach unten gewölbten Boden 14 des Gehäuses 11. Dem Gehäuse 11 ist eine allgemein mit 15 bezeichnete Kühleinrichtung zugeordnet, die ein oder mehrere innen oder außen an der Wandung des Gehäuses 11 vorhandene Kühlleitungen oder Kühlkanäle auf weist, durch die ein Kühlmittel, hier Wasser, mittels einer Pumpe 16 gefördert und in einem Kühler 16a gekühlt werden kann.

Das Gehäuse 13 ist vorzugsweise innen mit einem korrosions- und hitzebeständigen und vorzugsweise auch wärmeisolierend wirkenden Auskleidungsmaterial ausgekleidet. Beim vorliegenden Ausführungsbeispiel ist ein an die Innenkontur des Gehäuseunterteils 12 angepaßtes topfförmiges Auskleidungsteil 17a und eine an der Unterseite des Deckels 13 angeordnete Auskleidungs-Deckelplatte 17b vorgesehen, die vorzugsweise mit einem nach unten vorspringenden Ansatz 17c in das Auskleidungsteil 17a einfaßt.

Vorzugsweise ist zwischen dem Bodenteil 17d des Auskleidungsteils 17a und dem Boden 14 des Gehäuseunterteils 12 ein zusätzliches plattenförmiges Auskleidungs-Bodenteil 17e aus mikrowellendurchlässigem Material und/oder Kunststoff vorhanden. Zur Einkupplung der Mikrowellen ist im Boden 14 vorzugsweise zentral eine Öffnung 18 vorgesehen, in der bzw. unter der ein Magnetron 19 oder ein Hohlleiter bzw. ein zugehöriges Abstrahlelement wie eine Antenne 19a angeordnet sind. Auf dem oberen Rand der Öffnung 18 ist ein kuppelförmiges oder hohlkugelabschnittförmiges Einstrahlelement 21 aus mikrowellendurchlässigem Material, vorzugsweise Quarz, angeordnet, das in einer entsprechend geformten Ausnehmung des Bodenteils 17e sitzt. Es kann auch ein Einstrahlelement in Form eines Zylinders mit vertikaler Achse vorgesehen sein, in den die Antenne 19a in ein Loch mit Bewegungsspiel einfaßt.

Mit 20 ist ein Tragteil für das Gehäuse 11 bezeichnet, auf dem es angeordnet und ggf. befestigt ist.

Beim Ausführungsbeispiel gemäß Fig. 2 ist zur Verbesserung der Abdichtung zwischen der Auskleidungs-Deckelplatte 17b und dem oberen Rand des Auskleidungsteils 17a eine Dichtlippe 17f vorgesehen, die vorzugsweise an der Deckelplatte 17b einteilig angeformt ist und in das Auskleidungsteil 17a eingreift und an dessen Innenwandung anliegt und abdichtet. Dabei kann die Deckelplatte 17b den oberen Rand des Auskleidungsteils 17a auch außenseitig übergreifen, hier mittels eines nach unten vorragenden Ringvorsprungs 17g, der in eine außenseitige Ausnehmung entsprechenden Querschnitts am oberen Rand des Auskleidungsteils 17a einfaßt. Dieser obere Rand 17a ist somit verjüngt und greift in eine entsprechende Ringnut 17i in der Deckelplatte 17b ein.

Bei der vorliegenden Ausgestaltung ist insbesondere der Bodenbereich des Gehäuses 11 durch das Bodenteil 17d und das zusätzliche Bodenteil 17e gut wärmeisoliert. Deshalb ist die Kühleinrichtung 15 lediglich seitlich neben der Reaktionskammer 2 im oder am Mantel des Gehäuseunterteils 12 angeordnet, hier in Form eines Ringkühlkanals 22 in der Wandung des hier im horizontalen Querschnitt vorzugsweise kreisrunden Gehäuseunterteils 12.

Vorzugsweise sitzt die Deckelplatte 17b mit einem oberseitigen Zentrieransatz 17₁ in einer unterseitigen entsprechenden Ausnehmung am Deckel 13. Außerdem weist der Deckel 13 einen unterseitigen Zentrieransatz 13a auf, hier ein Zentrierring, der in die Umfangswand des Gehäuseunterteils 12 einfaßt und somit den Deckel 13 in seiner Verschlußlage zentriert.

Im Bereich des Gehäuses 11 sind zwei Temperatursensoren T1, T2 vorgesehen. Der erste Temperatursensor T1 befindet sich im Bodenbereich des Gehäuseunterteils 12 und dient der Istwert-Ermittlung zum Regeln der Heizleistung und somit auch der Temperatur in der Reaktionskammer 2.

Der zweite Temperatursensor T2 dient der Ermittlung der Manteltemperatur des Gehäuses 11 und zur Regelung der Kühleinrichtung 15 zwecks Verhinderung einer Überhitzung des Materials der Gehäusewandung.

Die Verbindungsleitung 9 ist mit dem oberen Bereich der Reaktionskammer 2 verbunden, wobei sie bei der vorliegenden Ausgestaltung den Deckel 13 vorzugsweise zentral durchsetzt. Es reicht ein verhältnismäßig dünner Nennquerschnitt für die Verbindungsleitung 9 aus. Vorzugsweise beträgt dieser Nennquerschnitt etwa 6 mm, wobei die Verbindungsleitung 9 vorzugsweise eine flexible Leitung aus Kunststoff sein kann, um den Deckel 13 beim Schließen und Öffnen bewegen zu können.

Beim Ausführungsbeispiel gemäß Fig. 2 verzweigt die Verbindungsleitung 9 in einer von oben in das Gehäuse 11, hier in den Deckel 13, eingesetzte oder eingeschraubte T-förmige Armatur 26, von der ein Verbindungsleitungszweig 9a sich zur Ladevorrichtung 4 und der andere Verbindungsleitungszweig 9b sich zum Steuerblock 5 erstreckt. Im zuerst genannten Verbindungsleitungszweig 9a ist eine Luft- oder Gaspumpe 20 und ein Rückschlagventil 27 angeordnet, das in einer zur Reaktionskammer 2 gerichteten Strömungsrichtung öffnet und entgegengesetzt schließt. Der dem gemeinsamen Verbindungsleitungsabschnitt bildende Durchführungskanal 9c, hier im Deckel 13, ist durch eine Hülse 28, vorzugsweise mit einem innenseitigen Flansch 28a, aus temperatur- und korrosionsbeständigem Material, vorzugsweise Kunststoff, ausgekleidet. Die Armatur 26 und zugehörige Verschraubungsringe 26a, 26b und die Verbindungsleitung 9 bestehen ebenfalls aus einem temperatur- und korrosionsbeständigen Material, insbesondere Kunststoff.

Der Verbindungsleitungszweig 9b weist im Steuerblock 5 ein erstes Sperr- oder Regelventil V auf, dessen Ventilglied den Zweig 9b oberhalb eines bestimmten Druckes oder Druckbreiches in der Reaktionskammer 2 mit zunehmendem Druck öffnet und mit abnehmendem Druck schließt. Der Ventikörper dieses Ventils V kann durch die Kraft einer Feder z.B. einer Tellerfeder 29 oder einer Wendelfeder, in seine Schießstellung beaufschlagt sein und durch den Druck im Zweig 9b geöffnet werden. Parallel dazu sind im Steuerblock 5 zwei oder drei Bypässe angeordnet, in denen jeweils ein Steuerventil angeordnet ist. Einem ersten Bypaß 9b1 und einer vorzugsweise kleineren Querschnittsgröße ist ein elektrisch antreibbares Ventil V1 zugeordnet, das in Abhängigkeit vom Druck in der Reaktionskammer 2 so elektrisch gesteuert (auf/zu) oder geregelt wird, daß ein bestimmter Druckwert nicht überschritten wird. bzw. ein Drucksollwert eingehalten wird. Einem zweiten Bypaß 9b2 ist ein Druck-Sicherheitsventil V2 zugeordnet, das oberhalb eines höheren, bestimmten Druckes in der Reaktionskammer 2 vorzugsweise schlagartig öffnet. Bei der vorliegenden Ausgestaltung ist dieses Ventil V2 eine Berstscheihe, die oberhalb des vorgenannten Sicherheits-Druckwertes berstet und somit den Bypaß 9b2 freigibt. Der Zweig 9b ist in seiner Querschnittsgröße vorzugsweise größer bemessen als der erste Bypaß 9b1. Der zweite Bypaß 9b2 ist vorzugsweise noch größer bemessen als der Zweig 9b.

Vorzugsweise ist ein weiterer Bypaß 9b3 vorgesehen, in dem ein elektrisch oder vorzugsweise manuell betätigbares Ventil V3 angeordnet ist, das als weiteres Sicherheitsventil dazu dient, nach einem Behandlungsprozeß den Druck in der Reaktionskammer durch Öffnen abzubauen und dadurch den Zugang zur Reaktionskammer zu ermöglichen, wenn das vorzugsweise programmgesteuerte Ventil V1 nicht funktionieren sollte, mit dem es ebenfalls möglich ist, den Druck nach dem Behandlungsprozeß abzubauen.

Die Bypässe 9b1, 9b2, 9b3 sind parallel zueinanander angeordnet, d.h., jeder Bypaß ist unabhängig von dem anderen funktionsfähig, was durch die Parallelschaltung gewährleistet ist.

Im Steuerblock 5 ist auch ein den Druck in der Reationskammer 2 ermittelnder Drucksensor P1 angeordnet und zwar in dem Bereich, der Verbindungsleitung 9, der dem Gehäuse 11 zugewandt ist.

In dem dem Gehäuse 11 abgewandten Bereich sind die Bypässe wieder zum gemeinsamen Verbindungsleitungszweig 9b zusammengeführt, wobei der Verbindungsleitungszweig 9b im weiteren Verlauf der Abführungsrichtung (siehe Pfeil 29) in einen Sammler oder Kamin (nicht dargestellt mündet).

Das zu behandelnde Material, insbesondere Probenmaterial 31, kann lose oder vorzugsweise in einem oder mehreren Aufnahmebehältern 7 in die Reaktionskammer 2 eingegeben werden. Bei der vorliegenden Ausgestaltung sind zwei oberseitig offene Aufnahmebehälter 7, insbesondere in hohlzylindrischer Form und mit einem ebenen Behälterboden 7a, dargestellt, in denen sich zusätzlich zum Probenmaterial 31 auch noch ein Zusatzmaterial, z.B. ein Reaktionsförderungsmaterial, insbesondere eine feste oder flüssige Chemikalie 32, angeordnet ist. Die horizontale Querschnittsgröße, hier der Durchmesser, der einander gleichen Aufnahmebehälter 7 beträgt nur einen Bruchteil der Querschnittsgröße der Reaktionskammer 2, so daß zwischen der Außenumfangswandung eines einzigen Aufnahmebehälters 7 und der Innenumfangswandung der Reaktionskammer 2 oder zwischen letzterer und mehreren Aufnahmehehältern 7 sowie zwischen letzteren, ein Freiraum vorhanden ist, der vorzugsweise durch ein mikrowellenabsorbierendes insbesondere flüssiges, mittelbar wirksames Heizmittel, bei der vorliegenden Ausgestaltung Wasser 33, gefüllt ist, und zwar etwa in der Höhe des Füllstandes der Aufnahmebehälter 7.

Vorzugsweise ist ein weiteres mittelbar wirksames Heizmittel aus mikrowellenabsoibierendem Material vorgesehen, nämlich eine bei der vorliegenden Ausgestaltung ebene Heizplatte 34, die auf der vorzugsweise ebenen Oberseite des Gehäusebodens 17d aufliegt und auf deren ebene Oberseite 34a der oder die Aufnahmebehälter 7 in flächigem Berührungskontakt und somit großflächigem Wärmeleitungskontakt stehen.

Die Funktion der Vorrichtung 1 ist folgende.

Zum Behandeln, insbesondere Aufbereiten des Materials 31 wird dieses wie voibeschrieben in die Reaktionskammer 2 eingegeben und das Gehäuse 11 verschlossen. Danach kann die Behandlung des Materials 31 unter Überdruck und Hitze beginnen, wobei der Überdruck, die Hitze und die Behandlung automatisch oder von Hand gesteuert werden können.

Für einen Behandlungsvorgang wird zunächst die Ladevorrichtung 4 eingeschaltet, um in der Reaktionskammer 2 einen Vordruck, beim vorliegenden Ausführungsbeispiel einen Vordruck von z.B. 80 bis 100 bar, zu erzeugen, der durch Einschaltung der Ladevorrichtung 4 um eine gewisse Zeit oder durch den Drucksensor P1 oder einen weiteren Drucksensor eingehalten werden kann. Der Druck wird durch Einführen oder Einpumpen von Luft oder eines Gases, z.B. eines inerten Gases wie Stickstoff, erzeugt. Danach wird die Heizvorrichtung 3 eingeschaltet, wobei hier durch Miktrowellen von unten das Material 31 direkt (sofern es sich um ein mikrowellenabsorbierendes Material handelt) und das Heizmittel 33 und die Heizplatte 34 ebenfalls direkt erhitzt werden. Dabei kommt es aufgrund von Materialverdampfung und -reaktionen zu einer deutlichen Druck- und Temperaturerhöhung in der Reaktionskammer 2 bzw. im Druckraum, wobei die Materialbehandlung unter diesen Bedingungen abläuft.

Es sind Einrichtungen vorgesehen, mit denen bestimmte Temperatur- und/oder Druckwerte bzw. Temperatur-und Druckbereiche eingestellt bzw. geregelt werden können, um die Behandlung bei einem bestimmten Druck und/oder einer bestimmten Temperatur durchführen zu können. Dabei ist zu berücksichtigen, daß bezüglich der Wirkungen der vorgenannten Maßnahmen Überschneidungen vorliegen, da die Temperatur sowohl auf den Druck als auch der Druck (unter Berücksichtigung von Materialreaktionen) auf die Temperatur Einfluß nehmen kann.

Es ist vorteilhaft, der Steuereinrichtung 6 der Vorrichtung 1 einen Prozessor zuzuordnen, und die Vorrichtung nach einem Programm so zu steuern, daß eine Materialbehandlung automatisch durchgeführt werden kann.

Nachfolgend werden regelmäßig stattfindende oder je nach Druck- und Temerpaturentwicklung mögliche Arbeitsverfahrensstufen als vorteilhaftes Ausführungsbeipiel beschrieben.

Bei einer ersten Verfahrensstufe wird als Start-Bedingung durch Einschalten der Pumpe 20 eine Ladedruck in der Reationskammer 2 erzeugt, dessen Druckbereich zwischen Null und 150 bar betragen kann. Hierdurch kann ein Gasvordruck erzeugt werden, der z.B. bei 80 bar liegen kann.

Nach Erreichen dieses Ladedruckes, der durch den Drucksensor P1 ermittelt wird, der ein entsprechendes Signal an die Steuereinrichtung 6 abgibt, wird als Verfahrensstufe zwei die Heizeinrichtung 6 eingeschaltet und das Material in vorbeschriebener Weise mittelbar und/oder unmittelbar erwärmt. Dabei entsteht in der Reaktionskammer 2 ein Überdruck in einem Bereich bis etwa 150 bar bei gleichzeitigem Temperaturanstieg, wobei der Behandlungsprozeß abläuft bzw. forciert wird. Bei einem Überdruck von z.B. etwa 120 bar liefert der Drucksensor P1 ein weiteres Drucksignal zur Regelung des elektrisch steuerbaren Ventils V1, das unter Berücksichtigung des Druckssollwertes von 120 bar so in Öffnungsrichtung und Schließrichtung betätigt wird, daß der Drucksollwert eingehalten wird. Bei dieser zweiten Verfahrensstufe wird auch die Heizleistung entsprechend einem Temperatursollwert so gesteuert (Einschalten/Abschalten) oder geregelt, daß der Temperatursollwert nicht überschritten, vorzugsweise eingehalten wird.

In dem Fall in dem aufgrund z.B einer starken Prozeßreaktion der Druck in der Reaktionskammer 2 den Drucksollwert (120 bar) übersteigt, wird als weitere Verfahrensstufe drei die Heizleistung reduziert oder abgeschaltet, z.B bei einem Druckwert von 140 bar.

Zusätzlich ist als weitere Verfahrensstufe vier das Druckbegrenzungsventil V vorgesehen, das bei einem höheren Druckwert als der Drucksollwert, z.B bei etwa 150 bar, in Funktion tritt und den Druck auf diesen Druckwert begrenzt. Das Druckbegrenzungsventil V kann so gesteuert sein, daß es nur dann in Funktion tritt, wenn die Steuerung bzw. Regelung des Ventils V1 oder die Temperatursteuerung bzw. -regelung ausfällt.

Als weiteres Sicherheitsventil ist gemäß der weiteren Verfährensstufe fünf das Sicherheitsventil V2 vorgesehen, das zwecks Explosionsschutz bei einer plötzlichen starken Druckerhöhung öffnet bzw. berstet.

Nach dem Prozeßablauf ist das Gehäuse bzw. die Reaktionskammer 2 vom Druck zu entlasten um den Zugang zu ermöglichen. Gemäß einer weiteren Verfahrensstufe sechs kann dies durch ein Öffnen des ansteuerbaren Ventils V1 oder des Ventils V3 ausgeführt werden. Das im zusätzlichen Bypaß 9b3 angeordnete Ventil V3 ist vorzugsweise ein handbetätigbares Ventil, um auch dann die Drucksbsenkung auszführen zu können, wenn das Ventil V1 gestört sein sollte.

Der vorzugsweise als Baueinheit B vormontierbare Steuerblock 5 ist aus druckfestem Metall insbesondere Stahl gefertigt. Zwecks Korrisionsschutz sind die im Steuerblock 5 vorhandenen Kanäle 9b, 9b1, 9b2, 9b3 mit korrosionsfestem Kunststoff ausgekleidet. Dies kann in vorteilhafter Weise dadurch erfolgen daß zunächst die Kanäle gebohrt werden und dann die Kanäle mit dem Kunststoff ausgekleidet werden, insbesondere durch Spritzen des Kunststoffs. Es ist auch möglich, die Kanäle nach der Verkleidung auszubohren oder mit dem Kunststoff zu verfüllen und dann den Kunststoff auszubohren, so daß die Auskleidung der Kanäle ergibt.

Im folgenden werden weitere Einzelheiten und Vorteile der erfindungsgemäßen Vorrichtung beschrieben.

Die Reaktionskammer 2 ist gleichzeitig der Druckraum und der Probenraum, und sie wird durch eine isolierende Auskleidung gegen einen direkten Kontakt zwischen dem Material und der insbesondere aus Edelstahl bestehenden druckfesten Druckwand des Gehäuses 11 geschützt. Die Auskleidung besteht aus einem Kunststoff, insbesondere PTFE, und dient als thermischer Schutz und Korrosionsschutz. Sowohl die innere Auskleidung, als auch die Umfangswand können durch die Kühleinrichtung 15 gekühlt werden, zwecks Verhinderung von Hitzeschäden. In der Reaktionskammer wird vor Reaktionsbeginn der Vordruck aufgebaut zur Vermeidung von Kondensationen und Verlusten durch Verdampfen von Materialien, insbesondere Lösungsmittel. Durch die Erhitzung des Materials 31 mit der Heizvorrichtung 3 wird ein weiterer Druckanstieg bis zu einem regelbaren Betriebsdruck erzielt. Die dadurch erzielbaren erhöhten Siedepunkte verhindern Verluste an Elementen und Verbindungen.

Bei exothermen, spontanen Reaktionen bietet das verhältnismäßig große Gesamtkammervolumen, vorzugsweise etwa 3 bis 3,5 dm³, einen zusätzlichen Sicherheitsfaktor, weil Druckspitzen vermieden werden. Da bei der vorliegenden Ausgestaltung aufgrund der verhältnismäßig großen Reaktionskammer 2 eine große Menge Material 31 zur Behandlung darin eingegeben werden kann, kann bei der Behandlung eine verhältnismäßig große Verbrennungswärme in der Reaktionskammer 2 freiwerden, die jedoch durch die Wärme-Aufnahmekapazität des mittelbar wirksamen Heizmittels 33 und durch die verhältnismäßig große Kammermasse aufgefangen werden kann, so daß Temperaturspitzen auch aus diesem Grund vermieden werden. Deshalb können mit der erfindungsgemäßen Vorrichtung eine große Menge Material 31 ohne Funktionsschwierigkeiten behandelt werden.

Bei der erfindungsgemäßen Vorrichtung können die vorzugsweise aus Kunststoff bestehenden Aufnahmebehälter 7 von einfacher und kostengünstig herstellbarer Bauweise sein, wobei sie innen und außen unter gleichen Druckbedingungen stehen. Deshalb werden auch unterschiedliche Reaktionen vermieden, soweit sie von unterschiedlichen Druckbedingungen abhängig sind. Außerdem werden Verluste und Verschleppungen von einem Behälter in den anderen auf praktisch vernachlässigbare Werte gesenkt, da der Siedepunkt der Substanzen (Lösungsmittel, Zusatzprodukte usw.) durch den Druck extrem erhöht wird. D.h., es können Behandlungen bei erhöhten Temperaturen und trotzdem geschlossenen System vorgenommen werden.

Die erfindungsgemäßen Maßnahmen führen auch zu einer automatischen Siedepunkt-Erhöhung durch Druckanstieg des das indirekte Heizmittel 33 bildenden Flüssigkeitsmediums. Bei einem Vor- bzw. Ladedruck von z.B. 100 bar ergibt sich eine Wassersiedetemperatur von 311°C. D.h., erst bei einer Überschreitung dieser Temperatur tritt eine automatische Innendruckerhöhung gemäß der Dampfdruck-Kurve des Heizmittels 34 auf. So stellt sich z.B. bei einer Wassertemperatur von 330°C ein Dampfdruck von 129 bar ein. Das bedeutet für die Anwendung, daß bei Einsatz eines niedrigsiedenden Heizmittels sich automatisch ein höherer Druck in der Reaktionskammer 2 einstellt als der Verdampfüngsdruck des zu behandelnden Materials 31 (oder Komponenten) im Aufnahmebehälter 7.

Zum Beispiel bei der Verwendung von Wasser als indirektes Heizmittel 34 und Salpetersäure als zu behandelndes Material 31 oder Hilfs- bzw. Reaktionsmaterial. Siedepunkt des Wassers gleich etwa 100°C und Siedepunkt der Salpetersäure gleich etwa 121°C. Bei diesem Beispiel liegt der Dampfdruck des Wassers höher und verhindert somit Verflüchtigungen von Salpetersäure in die Gasphase. Damit sind Kondensationen der Salpetersäure insbesondere an der Innenwandung der Reaktionskammer 2 weitgehend verhindert. Nur gasförmige Reaktionsprodukte können theoretisch in den freien Reaktionskammerraum gelangen. Dies gilt nicht nur für das vorbeschriebene Aufschlußbeispiel, sondern für fast alle chemischen Reaktionen mit unterschiedlichen Lösungsmitteln. Dieser Effekt läßt sich als automatische Druckkompensation bzw. Anpassung bezeichnen. Dabei ist durch die direkte Wärme-Umsetzung der Mikrowellenstrahlung mit festen und/oder flüssigen Stoffen (Heizmittel 33, 34) eine ausreichend schnelle Regelung möglich, d.h. beim Verringern oder Abschalten der Mikrowellenleistung fällt verhältnismäßig schnell die Temperatur und der Druck bietet durch Kontrolle der Parameter einen wesentlich höheren Sicherheitsstandard mit schnellerer Reaktion als herkömmliche Systeme.

Für die vorbeschriebenen Mikrowellen teilweise absorbierenden Materialien eignet sich vorzugsweise ein Kunststoff, in den Materialteile wie Partikel aus Mikrowellen absorbierendem Material, insbesondere Graphit, eingemischt oder legiert sind, und der unter der Bezeichnung Weflon an sich bekannt ist.

Für die Auskleidung, Hülse 28 und die Heizplatte 34 sowie ggf. für das Bodenteil 17e bedarf es eines korrosionsbeständigen Materials, das gegen bei der Aufbereitung entstehende Säuren des Probenmaterials resistent ist, vorzugsweise Polytretrafluorethylen (PTFE/Teflon) oder Tetrafluormischpolymerisat (TFM) oder auch Quarz, Keramik oder Glas.

Bei den Ausführungsbeispielen gemäß Fig. 3 bis 5 können die Vorrichtungen 1 jeweils von der vorbeschriebene Bauweise und Funktion sein. Die in den Figuren 1 und 2 dargestellten Eznzelheiten der Vorrichtung 1 sind in den Fig. 3 bis 5 aus Vereinfachungsgründen nicht dargestellt, denn diese Ausgestaltungen sollen hauptsächlich eine allgemein mit 41 bezeichnete Verstelleinrichtung für das Gehäuse 11 zeigen, bei der das Gehäuseunterteil 12 zu seiner Beschickung mit Probenmaterial oder Probenbehältern 7 oder Hilfsmitteln 33,34 leicht und bequem zugänglich ist.

Die Hauptteile der Verstelleinrichtung 41 sind eine etwa verkikal wirksame Hubvorrichtung 42 und eine etwa horizontal wirksame Verstellvorrichtung 43, mit denen eine solche zunächst etwa vertikale und dann seitliche Relativbewegung zwischen dem Gehäuseunterteil 12 und dem Deckel 13 herbeigeführt werden kann, daß sich das Gehäuseunterteil 12 in seiner in den Fig. 3 bis 5 andeutungsweise dargestellten Beschickungsstellung 44a bezüglich des Deckels 13 relativ seitlich zur Bedienungsseite 45 hin versetzt und somit von oben bequem zugänglich ist. Mit der Hubvorrichtung 42, die bei den Ausgestaltungen gemäß Fig. 3 und 5 am Deckel 13 angreift und gemäß Fig 4 am Gehäuseunterteil 12 angreift lassen sich diese Teile des Gehäuses 11 in etwa vertikaler Richtung voneinander trennen, so daß auch dann, wenn der Deckel 13 mit einem unterseitigen Ansatz 17c, 17t in das Gehäuseunterteil 12 einfaßt, eine relative seitliche Verlagerung dieser Teile voneinander möglich ist. Letzteres laßt sich jeweils mittels der Verstellvorrichtung 43 herbeiführen, die gemäß Figuren 3 und 4 am Gehäuseunterteil 12 und gemäß Fig. 5 am Deckel 13 angreift. Eine Führung 46, in der das Gehäuseunterteil 12 (Fig 3 und 4) oder der Deckel 13 (Fig 5) zur relativen seitlichen Verlagerung bewegbar geführt ist, kann durch das Zusammenwirken der Hubvorrichtung 42 und der Verstellvorrichtung 43 vorgegeben sein, wie es z.B. Fig. 5 zeigt oder sie kann auch als besonderes Führungselement vorgesehen sein, wie es die Fig. 3 und 4 zeigen.

Gemäß den Fig. 3 bis 5 sind desweiteren das Tragteil 20 für das Gehäuse 11 und Widerlager 47,48,49 für die Hubvorrichtung 42, die Verstellvorrichtung 43 und das Tragteil 20 zu deren Abstützung vorgesehen. Das Tragteil 20 und die Widerlager 47,48 49 können Teile eines Gerätes sein, in das die Vorrichtung 1 integriert ist.

Bei den Ausführungsbeispielen gemäß Fig. 3 bis 5 sind die Hubvorrichtung 42 und die Verstellvorrichtung 43 jeweils durch einen pneumatischen oder hydraulischen in beide Verstellrichtungen beaufschlagbaren Kolbenzylinder 51,52 gebildet. Bei der Ausgestaltung gemäß Fig. 3 ist der die Hubvorrichtung 42 bildende Kolbenzylinder 51 koaxial zwischen dem Deckel 13 und dem zugehörigen Widerlager 47 in etwa vertikaler Position bei geschlossenem Gehäuse 11 angeordnet. Der die Verstellvorrichtung 43 bildende Kolbenzylinder 52 greift am Gehäuseunterteil 12 an, wobei er sich auf der der Bedienungsseite 45 abgewandten Seite befindet und etwa horizontal erstreckt. Der Kolbenzylinder 51 ist vorzugsweise starr mit dem Widerlager 47 und dem Deckel 13 verbunden, so daß eine etwa vertikale Führung 50 für die Bewegung des Deckels 13 gegeben ist. Die etwa horizontale Führung 46 für die seitliche Bewegung des Gehäuseunterteils 12 kann z.B durch eine längliche Ausnehmung 59 im als Platte ausgebildeten Tragteil 20 gebildet sein, wie es in Fig. 3 dargestellt ist oder die Führung 46 kann auch durch den Kolbenzylinder 52 gebildet sein. Zur Steuerung der Kolbenzylinder 51,52 ist eine pneumatische oder hydraulische Steuereinrichtung 6a vorgesehen, die durch Fluidleitungen mit den doppelt wirksamen Kolbenzylindern 51,52 und durch Steuerleitungen mit der Steuereinrichtung 6 verbunden ist. Zum Öffnen des Gehäuses 11 wird zunächst der Deckel 13 eine durch entsprechende Beaufschlagung des Kolbenzylinders 51 geringfügig angehoben. Dann wird der Kolbenzylinder 52 betätigt und das Gehäuseunterteil 12 aus seiner mit durchgezogenen Linien dargestellten Arbeitsstellung 44 etwa horizontal in der Führung 46 in die Beschickungsstellung 44a verschoben. Das Schließen des Gehäuses 11 erfolgt in umgekehrten Bewegungs- bzw. Steuerungsschritten, d.h., es wird zunächst das Gehäuseunterteil 12 in seine Arbeitsstellung 44 zurückgeschoben und dann wird der Deckel 13 aus seiner Bereitschaftsstellung 444b in die Schließstellung abgesenkt.

Vom vorbeschriebenenen Ausführungsbeispiel unterscheidet sich das Ausführungsbeispiel gemäß Fig. 4 dadurch, däß der Deckel 13 ortsfest am Widerlager, z.B. am Widerlager 47, befestigt ist und dafür das Tragteil 20 durch die z.B ebenfalls durch einen Kolbenzylinder 51 gebildete Hubvorrichtung 42 etwa vertikal verstellbar ist. Bei dieser Ausgestaltung ist es vorteilhaft, den die Verstellvorrichtung 43 bildenden Kolbenzylinder 52 in Gelenken 61,62 mit rechtwinklig zur vertikalen Bewegungsebene verlaufenden Gelenkachsen zwischen dem Gehäuseunterteil 12 und dem zugehörigen Widerlager 48 zu lagern. Bei dieser Anordnung wird zum Öffnen des Gehäuses 11, das Gehäuseunterteil 12 geringfügig in die Bereitschaftstellung 44b abgesenkt und dann wird das Gehäuseteil 12 durch den Kolbenzylinder 52 in die Beschickungsstellung 44a verschoben. Das Schließen des Gehäuses 11 erfolgt in umgekehrten Bewegungs- bzw. Steuerungsschritten.

Das Ausführungsbeispiel nach Fig. 5, nach dem gleiche oder vergleichbare Teile ebenfalls mit gleichen Bezugszeichen versehen sind, unterscheidet sich vom Ausführungsbeispiel nach Fig. 3 dadurch, däß die Hubvorrichtung 42 und die Verstellvorrichtung 43 bzw. beide Kolbenzylinder 51,52 am Deckel 13 angreifen und auch der die Hubvorrichtung 52 bildende Kolbenzylinder 51 in Gelenken 63,64 mit rechtwinklig zu vertikalen Bewegungsebene des Deckels 13 verlaufenden Gelenkachsen gelagert ist. Die Bewegungssteuerungen der Kolbenzylinder 51,52 sind entsprechend, wobei jedoch nur der Deckel 13 zunächst in die Bereitschaftsstellung 44b und dann in die der Bedienungsseite 45 abgewandte Offenstellung bzw. Beschickungsstellung 44a bewegt wird. Hierbei ergibt sich aufgrund der doppelten Anlenkung des Deckels 13 eine integrierte Führung 46. Die Kolbenstange des Kolbenzylinders 51 kann bei der Bewegung in die Offenstellung 58 ausgeschoben werden oder durch den Kolbenzylinder 52 ausgezogen werden. Die Schlleßbewegung erfolgt entsprechend in umgekehrten Bewegungsschritten.

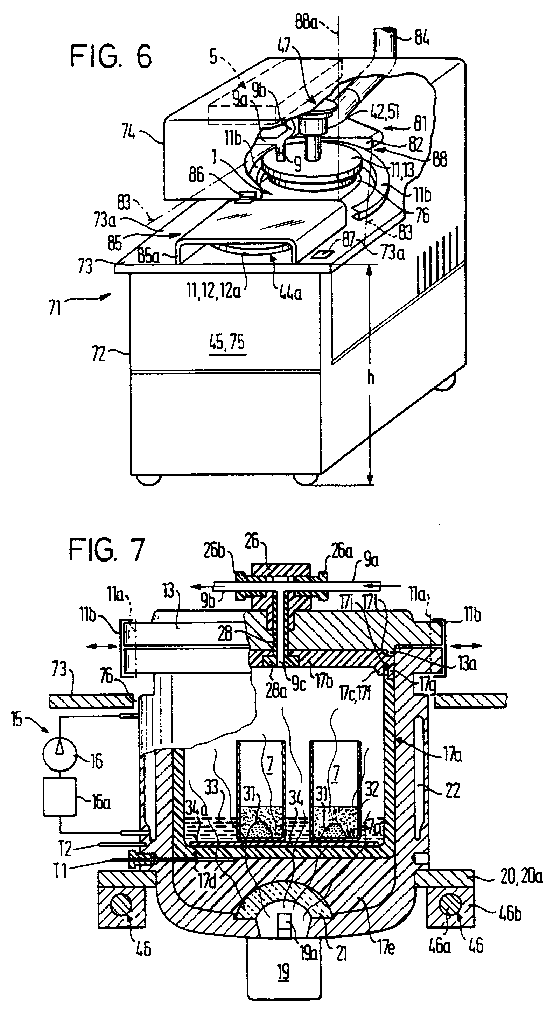

Das in Fig. 6 allgemein mit 71 bezeichnete Gerät mit der integrierten Vorrichtung 1 weist ein quaderförmiges Gehäuse 72 auf, das in seinem vorderen, der Bedienungsseite 45 zugewandten Bereich eine etwa horizontale Arbeitsplatte 73 in der Höhe h etwa eines Tisches aufweist. In seinem hinteren Bereich ist das Gehäuse 72 durch einen Aufbau 74 stufenförmig erhöht. Die Integration bzw. Anordnung der Vorrichtung 1 im Gerät 71 ist so getroffen, daß das Gehäuse 11 sich in seiner Arbeitsstellung in dessen hinterem Bereich befindet, d.h. unterhalb des Aufbaus 74, wobei das Gehäuseunterteil 12 zur Bedienungsseite 45 hin in den vorderen Bereich des Gerätes 71 verschiebbar ist, so daß es sich in der Beschickungsstellung 44a in der Nähe der Vorderseite 75 des Gehäuses 72 und mit seinem Randflansch 12a im Bereich der Arbeitsplatte 73 befindet, vorzugsweise diese etwas nach oben überragt. Die Arbeitsplatte 73 weist hierzu ein sich von hinten nach vom erstreckendes Langloch 76 auf, dessen Langlochmittelpunkte sich in der Arbeitsstellung 44 und in der Beschickungsstellung 44a für das Gehäuseunterteil 12 befinden. Von der Verstelleinrichtung 41 sind in den Figuren 6 und 7 nur die Hubeinrichtung 42 für den Deckel 13 und Teile der Verstellvorrichtung 43 für das Gehäuseunterteil 12 dargestellt, nämlich das Tragteil 20 in Form eines Tragringes 20a, in den das Gehäuseunterteil 12 mit einer unterseitigen stufenförmigen Verjüngung sitzt, und die Führung 46, hier in Form von zwei zu beiden Seiten des Gehäuseunterteils 12 angeordneten Führungsstangen 46a, auf denen der Tragring 20a mit Laufbuchsen 46b zwischen der Arbeitsstellung 44 und der Beschickungsstellung 44a von Hand frei verschiebbar gelagert ist. Um die Verstellbewegungen des Gehäuseunterteils 12 und des Deckels 13 zu ermöglichen, sind die sich zu ihnen erstreckenden Signal-, Steuer- und Zu- bzw. Abführungsleitungen flexibel ausgebildet, wie bereits bei den Ausgestaltungn nach Fig. 3 bis 5. Die Führungsstangen 46a sind im Gehäuse 72 im Bereich ihrer Enden gelagert. Von der Vorrichtung 42 ist der Kolbenzylinder 51 in Figur 6 sichtbar. Das ihm zugeordnete Widerlager 47 ist ein Teil des Gerätes 71 bzw. seines Gehäuses 72 und kann z.B. durch eine Traverse und/oder die obere Wand des Gehäuses 72 gebildet sein.

Der Vorrichtung 1 ist bei allen vorliegenden Ausgestaltungen eine in den Figuren 1 bis 5 nicht dargestellte Absaugvorrichtung 81 zur Absaugung der aus dem geöffneten Gehäuse 11 austretenden Dämpfe zugeordnet. Die Absaugvorrichtung 81 weist eine hinter dem Gehäuse 11 in Höhe des sich beim Öffnen des Deckels 13 bildenden Öffnungsschlitzes angeordnete Absaugöffnung 82 auf, vorzugsweise in Form eines horizontalen, sich quer erstreckenden Schlitzes, um einen breiten, sich etwa horizontal erstreckenden Absaugstrom 83 zu erzeugen, der die gesamte Breite der Öffnung des Gehäuseunterteils 12 überdeckt und vorzugsweise so stark ist, däß er auch die aus dem Gehäuseunterteil 12 in der Besctuckungsstellung 44a austretenden Dämpfe abzusaugen vermag, bei der vorliegenden Ausgestaltung von vorne nach hinten. Die abgesaugten Dämpfe können durch eine weiterführende, das Gehäuse 72 nach außen durchsetzende Abführungsleitung 84 außerhalb des vorhandenen Gebäudes oder zu einem Kamin (nicht dargestellt) abgeleitet werden.

Einerseits zur Verbesserung der Absaugung und andererseits als mechanische Sicherheitsvorrichtung ist ein sich etwa horizontal erstreckendes Leitblech 85 vorgesehen, das sich in einem geringen Abstand von etwa einigen cm über der Öffnung des Gehäuseunterteils 12 in der Beschickungsstellung 44a befindet und zwischen seiner die Öffnung überdeckenden Arbeitsstellung und einer die Offnung freigebenden Freigabestellung beweglich gelagert ist. Bei der vorliegenden Ausgestaltung ist das Leitblech 85 von der Öffnung hochklappbar angeordnet, z.B. zur Seite oder gemäß Fig. 6 nach hinten. Hierzu können Scharniere 86 dienen, die bei der vorliegenden Ausgestaltung zwischen dem hinteren Ende des Leitblechs 85 und der benachbarten Frontseite des Aufbaus 74 angeordnet und daran befestigt sind. Vorzugsweise weist das Leitblech 85 - von vorne gesehen - mit seitlich abgewinkelten Schenkeln 85a die Querschnittsform eines auf den Kopf gestellten U auf, wodurch die Verbreitung der austretenden Dämpfe zu den Seiten hin verhindert und die Führung des Absaugstroms 83 sowie die Absaugung verbessert werden. Die Seitenschenkel 85a stehen vorzugsweise auf der Arbeitsplatte 73. Das Leitblech 85 schützt in seiner überdeckenden Arbeitsstellung das offene Gehäuseunterteil 12 nicht nur vor Verunreinigungen, die hineinfallen könnten, sondern es stellt auch eine Schutzvorrichtung gegen Quetschgefahren für die Hände der Bedienungsperson dar, wenn das Gehäuseunterteil 12 in die Beschickungsstellung 44a verstellt wird. Es ist deshalb aus Sicherheitsgründen vorteilhaft, die Steuerung der Vorrichtung 1 so auszulegen, daß das Gehäuseunterteil 12 nur in der Arbeitsstellung des Leitblechs 85 in die Beschickungsstellung 44a verstellt werden kann. Dies läßt sich durch einen Kontaktgeber 87 am Gehäuse verwirklichen, der vom Leitblech 85 in dessen Arbeitsstellung betätigt wird und durch eine Signalleitung mit der zughörigen Steuereinrichtung 6,6a verbunden ist.

Das Leitblech 85 besteht vorzugsweise aus durchsichtigem Material, insbesondere Kunststoff, wie Plexiglas oder dergleichen, um den Einblick in das Gehäuseunterteil 12 zu ermöglichen.

Die zu beiden Seiten des Leitblechs 85 vorhandenen Flächenteile 85a der Arbeitsplatte 73 können als Stellflächen z.B. für Probenbehälter 7 dienen.

Die in Fig. 6 ebenfalls vorhandenen Verschlußringhälften 11b können durch einen Antriebsmotor angetrieben sein. Sie können jeweils an einem ihrer Enden in einem Gelenk 88 mit vertialer Gelenkachse 88a schwenkbar gelagert sein, das vorzugsweise hinter dem Gehäuse 11 angeordnet und am Gehäuse 72 oder Anbauteilen desselben befestigt ist. Der nicht dargestellte Antriebsmotor kann im Bereich des Gelenkes 88 angeordnet oder darin integriert sein. Vor dem Öffnen des Gehäuses 11 mittels der Hubvorrichtung 42 sind die Verschlußringhälften 11b oder ein anderer Verschluß zu lösen und beim Schließen nach der Hubbewegung zu schließen.

Vorzugsweise ist das insbesondere aus korrosionsbeständigem Material wie Metall, insbesondere Edelstahl, leitende Gehäuseunterteil 12 mit seinem Boden 14 einstückig hergestellt und durchgehend verbunden, wodurch es sehr stabil ist.

## Patentansprüche

1. Vorrichtung zum Auslösen und/oder Fördern chemischer oder physikalischer Prozesse in einem Material (31), insbesondere einem Probenmaterial, mit
- einer von einem Gehäuse (11) allseitig umgebenen Reaktionskammer (2), wobei das Gehäuse (11) aus einem topfförmigen Gehäuseunterteil (12) und einem Deckel (13) besteht,
- einer Mikrowellen-Heizvorrichtung (3) für die Reaktionskammer (2), und
- einer Hubvorrichtung (42), die eine im wesentlichen vertikale Relativbewegung zwischen dem Deckel (13) und dem Gehäuseunterteil (12) herbeiführt,
**gekennzeichnet durch**
eine Verstellvorrichtung (43), die nach einer durch die Hubvorrichtung (42) herbeigeführten im wesentlichen vertikalen Relativbewegung zwischen dem Deckel (13) und dem Gehäuseunterteil (12) eine im wesentlichen horizontale Relativbewegung zwischen dem Deckel (13) und dem Gehäuseunterteil (12) herbeiführt.

2. Vorrichtung nach Anspruch 1,
**dadurch gekennzeichnet,**
daß die Hubvorrichtung (42) an dem Deckel (13) angreift und diesen zwischen einer Arbeitsstellung (44) und einer bezüglich des Gehäuseunterteils (12) vertikal versetzten Bereitschaftsstellung (44b) anhebt bzw. absenkt, und
daß die Verstellvorrichtung (43) an dem Gehäuseunterteil (12) angreift und dieses zwischen der Arbeitsstellung (44) und einer bezüglich des Deckels (13) horizontal versetzten Beschickungstellung (44a) bewegt.

3. Vorrichtung nach Anspruch 1,
**dadurch gekennzeichnet,**
daß die Hubvorrichtung (42) an dem Gehäuseunterteil (12) angreift und dieses zwischen einer Arbeitsstellung (44) und einer bezüglich des Deckels (13) vertikal versetzten Bereitschaftsstellung (44b) absenkt bzw.anhebt, und
daß die Verstellvorrichtung (43) ebenfalls an dem Gehäuseunterteil (12) angreift und dieses zwischen der Bereitschaftsstellung (44b) und einer bezüglich des Deckels (13) horizontal versetzten Beschickungstellung (44a) bewegt.

4. Vorrichtung nach Anspruch 1,
**dadurch gekennzeichnet,**
daß die Hubvorrichtung (42) an dem Deckel (12) angreift und diesen zwischen einer Arbeitsstellung (44) und einer bezüglich des Gehäuseunterteils (12) vertikal versetzten Bereitschaftsstellung (44b) anhebt bzw.absenkt, und
daß die Verstellvorrichtung (43) ebenfalls an dem Deckel (13) angreift und diesen zwischen der Bereitschaftsstellung (44b) und einer bezüglich des Gehäuseunterteils (12) horizontal versetzten Beschickungstellung (44a) bewegt.

5. Vorrichtung nach einem der vorhergehenden Ansprüche,
**dadurch gekennzeichnet,**
daß eine im wesentlichen horizontal verlaufende Führung (46) zum Führen der durch die Verstellvorrichtung (43) herbeigeführten im wesentlichen vertikalen Relativbewegung zwischen dem Deckel (13) und dem Gehäuseunterteil (12) vorgesehen ist.

6. Vorrichtung nach einem der vorherigen Ansprüche,
**dadurch gekennzeichnet,**
daß der Deckel (13) mit einem unterseitigen Ansatz (17c, 17f) in das Gehäuseunterteil (12) einfaßt und die etwa vertikale Hubbewegung etwas größer bemessen ist, als die Höhe des Ansatzes (17c, 17f).

7. Vorrichtung nach einem der vorherigen Ansprüche,
**dadurch gekennzeichnet,**
daß ihr eine Absaugvorrichtung (81) zugeordnet ist zum Absaugen der bei geöffnetem Gehäuse (11) daraus austretenden Dämpfe, wobei vorzugsweise die Absaugvorrichtung (81) bezüglich des Gehäuses (11) auf der Seite angeordnet ist, die der Führung (46) abgewandt ist, vorzugsweise hinter dem Gehäuse (11) angeordnet ist,

8. Vorrichtung, nach einem der vorherigen Ansprüche,
**dadurch gekennzeichnet,**
daß der Öffnung des Gehäuseunterteils (12) in dessen seitlich verschobenen Beschickungsstellung (44a) ein etwa horizontales Leitblech (85) zugeordnet ist, das sich vorzugsweise in einem Abstand über der Öffnung befindet und zwischen einer die Öffnung abdeckenden oder überdeckenden Arbeitsstellung und einer die Öffnung freigebenden Freigabestellung verstellbar ist, insbesondere hoch oder wegklappbar ist.

9. Vorrichtung nach einem der vorherigen Ansprüche,
**gekennzeichnet durch**
- einen Auslaß (9b) im Gehäuse (11) für ein Gas, dem ein Auslaßventil (V, V1, V2) zugeordnet ist, zwecks Ablassens eines einen bestimmten Wert übersteigenden Innendruckes in der Reaktionskammer (2),
- und einen Einlaß (9a) im Gehäuse (11).

10. Vorrichtung nach Anspruch 9,
**dadurch gekennzeichnet,**
daß ein oder mehrere parallel angeordnete Ventile (V, V1, V2, V3) in einem vom Gehäuse (11) entfernt angeordneten Block (5) angeordnet sind, der durch eine Rohr- oder Schlauchverbindung (9b) mit dem Gehäuse (11) verbunden ist.

11. Vorrichtung nach Anspruch 9 oder 10,
**dadurch gekennzeichnet,**
daß dem Einlaß (9a) eine Druckquelle und eine Steuereinrichtung zum Zuführen des Gases unter Druck vor Einschaltung der Heizung (3) zugeordnet sind,

12. Vorrichtung nach Anspruch 11,
**dadurch gekennzeichnet,**
daß der Auslaß und der Einlaß durch eine gemeinsame Durchführung (9c) im Gehäuse (11) und durch eine an die Durchführung angeschlossene Rohr- oder Schlauchleitung gebildet sind, die zum einen zu einen Auslaßventit und zum anderen zur Druckquelle verzweigt.

13. Vorrichtung nach einem der Ansprüche 9-12,
**dadurch gekennzeichnet,**
daß der Auslaß und/oder der Einlaß (9a, 9b, 9c) im Deckel (13) angeordnet sind.

14. Vorrichtung nach einem der vorherigen Ansprüche,
**dadurch gekennzeichnet,**
daß das vorzugsweise aus Metall, insbesondere Edelstahl, bestehende Gehäuse (11) innen mit einem korrosionsbeständigen und hitzebeständigen Material, insbesondere Kunststoff, ausgekleidet ist.

15. Vorrichtung nach einem der vorherigen Ansprüche,
**dadurch gekennzeichnet,**
daß zwischen der Einkupplungsvorrichtung für Mikrowellen und der Reaktionskammer (2) ein indirekt auf das Material (31) wirksames Heizmittel (33, 34) angeordnet ist.

16. Vorrichtung nach einem der vorherigen Ansprüche,
**dadurch gekennzeichnet,**
daß ihr ein oder mehrere Aufnahmebehälter (7) für das Material (31) in der Reaktionskammer (2) zugeordnet sind bzw. in letztere einstellbar sind.

17. Vorrichtung nach einem der vorherigen Ansprüche,
**dadurch gekennzeichnet,**
daß die Außenquerschnittsgröße des oder der Aufnahmebehälter (7) kleiner ist als die horizontale Querschnittsgröße der Reaktionskammer(2).

18. Vorrichtung nach einem der vorherigen Ansprüche,
**gekennzeichnet durch**
ein mit dem Material (31) und/oder den oder dem Aufnahmebehältern (7) in flächigem Kontakt stehenden Heizmittel (33, 34) aus festem oder flüssigem, Mikrowellen wenigstens teilweise absorbierendem Material in der Reaktionskammer (2).

19. Vorrichtung nach Anspruch 18,
**dadurch gekennzeichnet,**
daß auf dem Boden (14) der Reaktionskammer (2) ein das Material (31) oder den oder die Aufnahmebehälter (7) tragendes, insbesondere plattenförmiges Tragteil, aus Mikrowellen wenigstens teilweise absorbierendem Material, insbesondere Kunststoff, der ein mikrowellenabsorbierendes Material enthält, angeordnet ist.

20. Vorrichtung nach einem der vorherigen Ansprüche,
**dadurch gekennzeichnet,**
daß eine Einkoppungsvorrichtung zur Einkopplung der Mikrowellen von unten in die Reaktionskammer (2) vorgesehen ist.

21. Vorrichtung nach einem der vorherigen Ansprüche,
**dadurch gekennzeichnet,**
daß ihr eine Regeleinrichtung zugeordnet ist, die einen bestimmten Innendruck in der Reaktionskammer (2) in Abhängigkeit vom Innendruck und/oder der Temperatur regelt, und das vorzugsweise das Auslaßventil oder ein weiteres Auslaßventil (V1) ein Regelglied der Regelungseinrichtung ist.

22. Vorrichtung nach einem der vorherigen Ansprüche,
**dadurch gekennzeichnet,**
daß ihr eine Regeleinrichtung zur Regelung einer bestimmten, insbesondere konstanten Temperatur in der Reaktionskammer (2) zugeordnet ist und daß vorzugsweise die Heizleistung in Abhängigkeit von der bestimmten Temperatur im Sinne einer Regelung gesenkt oder erhöht oder abgeschaltet wird, vorzugsweise bei einer höheren Temperatur abgeschaltet wird.

23. Vorrichtung nach einem der vorherigen Ansprüche,
**dadurch gekennzeichnet,**
daß die Auslaßleitung (9b) einen ersten Bypaß (9b1) aufweist, in dem ein insbesondere in Abhängigkeit vom Innendruck gesteuertes oder geregeltes Ventil (V1) angeordnet ist.

24. Vorrichtung nach einem der vorherigen Ansprüche,
**dadurch gekennzeichnet,**
daß der Auslaßleitung (9b) ein zweiter Bypaß (9b2) zugeordnet ist, in dem ein bei einem erhöhten Innendruck selbsttätig öffnendes Sicherheitsventil, insbesondere ein Berstventil, angeordnet ist.

25. Vorrichtung nach einem der vorherigen Ansprüche,
**dadurch gekennzeichnet,**
daß das oder eines der Ventile (V1) oder ein weiteres, vorzugsweise manuell betätigbares Ventil (V3) in einem weiteren Bypaß (9b3) zur Druckentlastung der Reaktionskammer (2) nach Prozeßablauf eingerichtet ist.

26. Vorrichtung nach einem der vorherigen Ansprüche,
**dadurch gekennzeichnet,**
daß der Reaktionskammer (2) ein manuell oder elektrisch ansteuerbares Ventil (V1, V3) zugeordnet ist zum Entspannen des Vordrucks vor dem Öffnen der Reaktionskammer (2).

## Claims

1. A device for initiating and/or furthering chemical or physical processes in a material (31), in particular a sample material, comprising
- a reaction chamber (2) surrounded on all sides by a housing (11), the housing (11) consisting of a cup-shaped housing lower part (12) and a lid (13),
- a microwave heating device (3) for the reaction chamber (2) and
- a vertical displacement device (42) which effects a substantially vertical relative movement between the lid (13) and the housing lower part (12),
characterized by an adjusting device (43) which, following a substantially vertical relative movement between the lid (13) and the housing lower part (12) effected by the vertical displacement device (42), effects a substantially horizontal relative movement between the lid (13) and the housing lower part (12).

2. A device according to Claim 1, characterised in that the vertical displacement device (42) acts on the lid (13) and raises or lowers said lid between an operating position (44) and a ready position (44b) vertically offset relative to the housing lower part (12), and that the adjusting device (43) acts on the housing lower part (12) and moves said housing lower part between the operating position (44) and a charging position (44a) horizontally offset relative to the lid (13).

3. A device according to Claim 1, characterised in that the vertical displacement device (42) acts on the housing lower part (12) and raises or lowers said housing lower part between its operating position (44) and a ready position (44b) vertically offset relative to the lid (13), and that the adjusting device (43) likewise acts on the housing lower part (12) and moves said housing lower part between the ready position (44b) and a charging position (44a) horizontally offset relative to the lid (13).

4. A device according to Claim 1, characterised in that the vertical displacement device (42) acts on the lid (12) and raises or lowers said lid between an operating position (44) and a ready position (44b) vertically offset relative to the housing lower part (12), and that the adjusting device (43) likewise acts on the lid (13) and moves said lid between the ready position (44b) and a charging-position (44a) horizontally offset relative to the housing lower part (12).

5. A device according to one of the preceding claims, characterized in that a substantially horizontally extending guide (46) is provided for guiding the substantially vertical relative movement between the lid (13) and the housing lower part (12) effected by the adjusting device (43).

6. A device according to one of the preceding claims, characterised in that the lid (13) fits into the housing lower part (12) with an underside projection (17c, 17f) and the approximately vertical displacement movement is contrived to be somewhat greater than the height of the projection (17c, 17f).

7. A device according to one of the preceding claims, characterized in that it is assigned a suction device (81) for the removal by suction of the vapours escaping from the housing (11) when said housing is open, the suction device (81) preferably being arranged relative to the housing (11) on the side facing away from the guide (46), preferably behind the housing (11).

8. A device according to one of the preceding claims, characterised in that in the laterally displaced charging position (44a) of the housing lower part (12), the opening in said housing lower part is assigned an approximately horizontal baffle plate (85) which is preferably arranged at a distance above the opening and is adjustable, and in particular can be swung up or away, between an operating position covering or overlapping the opening and a release position releasing the opening.

9. A device according to one of the preceding claims, characterised by
- an outlet (9b) in the housing (11) for a gas, which outlet is assigned an outlet valve (V, V1, V2) for the purpose of discharging an inner pressure in the reaction chamber (2) exceeding a specified value
- and an inlet (9a) in the housing (11).

10. A device according to Claim 9, characterised in that one or more parallel-disposed valve(s) (V, V1, V2, V3) are arranged in a block (5) which is situated a distance from the housing (11) and is connected to the housing (11) by a pipe- or hose connection (9b).

11. A device according to Claim 9 or 10, characterised in that the inlet (9a) is assigned a pressure source and a control device for supplying the gas under pressure prior to the switching on of the heating device (3).

12. A device according to Claim 11, characterised in that the outlet and the inlet are formed by a common channel (9c) in the housing (11) and by a pipe- or hose line which is connected to the channel and branches on the one hand to an outlet valve and on the other hand to the pressure source.

13. A device according to one of Claims 9 to 12, characterised in that the outlet and/or the inlet (9a, 9b, 9c) are arranged in the lid (13).

14. A device according to one of the preceding claims, characterised in that the housing (11), which preferably consists of metal, in particular high-grade steel, is internally lined with a corrosion-resistant and heat-resistant material, in particular plastics material.

15. A device according to one of the preceding claims, characterised in that a heating means (33, 34), which acts indirectly upon the material (31), is arranged between the input-coupling device for microwaves and the reaction chamber (2).

16. A device according to one of the preceding claims, characterised in that it is assigned one or more accommodating container(s) (7) for the material (31) in the reaction chamber (2), which containers are adjustable therein.

17. A device according to one of the preceding claims, characterised in that the external cross-sectional size of the accommodating container(s) (7) is smaller than the horizontal cross-sectional size of the reaction chamber (2).

18. A device according to one of the preceding claims, characterised by a heating means (33, 34) which is in surface contact with the material (31) and/or the accommodating container(s) (7) and consists of solid or liquid, at least partially microwave-absorbent material in the reaction chamber (2).

19. A device according to Claim 18, characterised in that an in particular plate-shaped bearing member which bears the material (31) or the accommodating container(s) (7) and is composed of at least partially microwave-absorbent material, in particular plastics material containing a microwave-absorbent material, is arranged on the base (14) of the reaction chamber (2).

20. A device according to one of the preceding claims, characterised in that an input-coupling device is provided for the input-coupling of the microwaves in the upwards direction into the reaction chamber (2).

21. A device according to one of the preceding claims, characterised in that it is assigned a regulating device which regulates a specified inner pressure in the reaction chamber (2) as a function of the inner pressure and/or the temperature, and that preferably the outlet valve or a further outlet valve (VI) is a regulating element of the regulating device.

22. A device according to one of the preceding claims, characterized in that it is assigned a regulating device for regulating a specified, in particular constant temperature in the reaction chamber (2), and that preferably the heating power is lowered or raised or switched off as a function of the specified temperature in terms of a regulating process, and is preferably switched off at a higher temperature.

23. A device according to one of the preceding claims, characterised in that the outlet line (9b) comprises a first bypass (9b1) in which is arranged a valve (V1) which is controlled or regulated in particular as a function of the inner pressure.

24. A device according to one of the preceding claims, characterised in that the outlet line (9b) is assigned a second bypass (9b2) in which is arranged a safety valve, in particular a rupture valve, which automatically opens at an elevated inner pressure.

25. A device according to one of the preceding claims, characterised in that the valve (V1) or one of the valves (V1) or a further, preferably manually operable valve (V3) is installed in a further bypass (9b3) for the pressure relief of the reaction chamber (2) after the end of the process.

26. A device according to one of the preceding claims, characterised in that the reaction chamber (2) is assigned a manually or electrically operable valve (V1, V3) for releasing the initial pressure prior to the opening of the reaction chamber (2).

## Revendications

1. Dispositif pour déclencher et/ou activer des processus chimiques ou physiques dans un matériau (31) notamment dans un matériau échantillon, comportant
- une chambre de réaction (2) entourée de tous les côtés par une enveloppe (11), l'enveloppe (11) étant formée d'une partie inférieure d'enveloppe (12) en forme de pot et d'un couvercle (13),
- un dispositif de chauffage à micro-ondes (3) pour la chambre de réaction (2) et
- un dispositif de levage (42) qui exécute un déplacement relatif essentiellement vertical entre le couvercle (13) et la partie inférieure d'enveloppe (12),
caractérisé par
un dispositif de déplacement (43) qui, après un déplacement relatif essentiellement vertical entre le couvercle (13) et la partie inférieure d'enveloppe (12) exécuté par le dispositif de levage (42), exécute un déplacement relatif essentiellement horizontal entre ledit couvercle (13) et ladite partie inférieure d'enveloppe (12).

2. Dispositif selon la revendication 1, caractérisé par le fait
que le dispositif de levage (42) agit sur le couvercle (13) et soulève ou abaisse celui-ci entre une position de travail (44) et une position d'attente (44b) décalée dans la direction verticale par rapport à la partie inférieure d'enveloppe (12) et
que le dispositif de déplacement (43) agit sur la partie inférieure d'enveloppe (12) et déplace cette dernière entre la position de travail (44) et une position de chargement (44a) décalée dans la direction horizontale par rapport au couvercle (13).

3. Dispositif selon la revendication 1, caractérisé par le fait
que le dispositif de levage (42) agit sur la partie inférieure d'enveloppe (12) et soulève ou abaisse celle-ci entre une position de travail (44) et une position d'attente (44b) décalée dans la direction verticale par rapport au couvercle (13) et
que le dispositif de déplacement (43) agit également sur la partie inférieure d'enveloppe (12) et déplace cette dernière entre la position d'attente (44b) et une position de chargement (44a) décalée dans la direction horizontale par rapport au couvercle (13).

4. Dispositif selon la revendication 1, caractérisé par le fait
que le dispositif de levage (42) agit sur le couvercle (13) et soulève ou abaisse celui-ci entre une position de travail (44) et une position d'attente (44b) décalée dans la direction verticale par rapport à la partie inférieure d'enveloppe (12) et
que le dispositif de déplacement (43) agit également sur le couvercle (13) et déplace ce dernier entre la position d'attente (44b) et une position de chargement (44a) décalée dans la direction horizontale par rapport à là partie inférieure d'enveloppe (12).

5. Dispositif selon une des revendications précédentes, caractérisé par le fait
qu'un moyen de guidage (46) est prévu aux fins de guider le déplacement relatif exécuté par le dispositif de déplacement (43), essentiellement dans la direction verticale, entre le couvercle (13) et la partie inférieure d'enveloppe (12).

6. Dispositif selon une des revendications précédentes, caractérisé par le fait
que le couvercle (13) s'encastre par une saillie (17c, 17f) inférieure dans la partie inférieure d'enveloppe (12) et que le déplacement sensiblement vertical est légèrement supérieur à la hauteur de la saillie (17c, 17f).

7. Dispositif selon une des revendications précédentes, caractérisé par le fait
qu'un dispositif d'extraction (81) lui est associé pour aspirer les vapeurs qui s'échappent de l'enveloppe (11) ouverte, le dispositif d'extraction (81), de préférence, étant disposé sur le côté qui est éloigné du moyen de guidage (46) par rapport à l'enveloppe (11), de préférence derrière l'enveloppe (11).

8. Dispositif selon une des revendications précédentes, caractérisé par le fait
qu'une tôle formant déflecteur (85), sensiblement horizontale, est associée à l'ouverture de la partie inférieure d'enveloppe (12) dans la position de chargement (44a) de celle-ci, décalée latéralement, laquelle tôle se trouve de préférence à une certaine distance au-dessus de l'ouverture et peut être déplacée, notamment peut pivoter vers le haut ou latéralement, entre une position de travail dans laquelle elle ferme ou couvre l'ouverture et une position de dégagement découvrant l'ouverture.

9. Dispositif selon une des revendications précédentes, caractérisé par
- une sortie (9b) dans l'enveloppe (11) pour un gaz à laquelle une soupape de sortie (V, V1) est associée aux fins de relâcher une pression interne dépassant une valeur prédéterminée dans la chambre de réaction (2),
- et une entrée (9a) dans l'enveloppe (11).

10. Dispositif selon la revendication 9, caractérisé par le fait
qu'une ou plusieurs soupapes (V, V1, V2, V3) montées en parallèle sont disposées dans un bloc (5) éloigné de l'enveloppe (11), qui communique avec ladite enveloppe (11) par des conduites rigides ou souples (9b).

11. Dispositif selon la revendication 9 ou 10, caractérisé par le fait
qu'une source de pression et un dispositif de commande pour l'introduction du gaz sous pression avant la mise en service du chauffage (3) sont associés à l'entrée (9a).

12. Dispositif selon la revendication 11, caractérisé par le fait que
la sortie et l'entrée sont formées par une traversée (9c) commune dans l'enveloppe (11) et par une conduite rigide ou souple connectée à ladite traversée qui se divise d'un côté en direction d'une soupape de sortie et de l'autre en direction de la source de pression.

13. Dispositif selon une des revendications 9 à 12, caractérisé par le fait que la sortie et/ou l'entrée (9a, 9b, 9c) est/sont disposée(s) dans le couvercle (13).

14. Dispositif selon une des revendications précédentes, caractérisé par le fait que
l'enveloppe (11), laquelle est réalisée de préférence en métal, notamment en acier spécial, est revêtue intérieurement d'un matériau résistant à la corrosion et à la chaleur, en particulier de matière plastique.

15. Dispositif selon une des revendications précédentes, caractérisé par le fait
qu'un moyen de chauffage (33, 34) qui agit de manière indirecte sur le matériau (31) est disposé entre le dispositif de couplage pour les microondes et la chambre de réaction (2).

16. Dispositif selon une des revendications précédentes, caractérisé par le fait
qu'un ou plusieurs contenants (7) pour le matériau (31) lui est/sont associé(s) dans la chambre de réaction (2), voire est/sont réglables dans celle-ci.

17. Dispositif selon une des revendications précédentes, caractérisé par le fait que
la section hors tout du ou des contenants (7) est inférieure à la section horizontale de la chambre de réaction (2).

18. Dispositif selon une des revendications précédentes, caractérisé par
un moyen de chauffage (33,34) qui est en contact surfacique avec le matériau (31) et/ou le ou les contenant(s) (7), lequel moyen de chauffage est constitué d'un matériau liquide ou solide qui absorbe au moins partiellement les micro-ondes dans la chambre de réaction (2).

19. Dispositif selon la revendication 18, caractérisé par le fait
qu'un élément support, notamment en forme de plaque, en un matériau qui absorbe au moins partiellement les micro-ondes, notamment en matière plastique contenant une matière absorbant les micro-ondes, qui supporte le matériau (31) ou le ou les contenants (7) est disposé sur le fond (14) de la chambre de réaction (2).

20. Dispositif selon une des revendications précédentes, caractérisé par le fait
qu'un dispositif de couplage est prévu pour le couplage des micro-ondes par le bas dans la chambre de réaction (2).

21. Dispositif selon une des revendications précédentes, caractérisé par le fait
qu'un dispositif de régulation lui est associé, lequel dispositif régule une pression interne déterminée dans la chambre de réaction (2) en fonction de la pression interne et/ou de la température et que de préférence la soupape de sortie ou une soupape de sortie (VI) supplémentairé est un organe de réglage du dispositif de régulation.

22. Dispositif selon une des revendications précédentes, caractérisé par le fait
qu'un dispositif de régulation lui est associé pour la régulation d'une température déterminée, notamment constante, dans la chambre de réaction (2) et que de préférence la puissance de chauffage est abaissée ou élevée dans le sens d'une régulation en fonction de la température déterminée ou est coupée de préférence lorsque la température est plus élevée.

23. Dispositif selon une des revendications précédentes, caractérisé par le fait que
la conduite de sortie (9b) comporte un premier bypass (9b1) dans lequel est placée une soupape (VI) commandée ou régulée notamment en fonction de la pression interne.

24. Dispositif selon une des revendications précédentes, caractérisé par le fait
qu'un deuxième bypass (9b2), dans lequel est placée une soupape de sécurité qui s'ouvre automatiquement en cas de pression interne trop élevée, notamment une soupape à éclatement, est associé à la conduite de sortie (9b).

25. Dispositif selon une des revendications précédentes, caractérisé par le fait
que la ou l'une des soupapes (VI) ou une soupape supplémentaire (V3), de préférence à commande manuelle est disposée dans un bypass supplémentaire (9b3) pour relâcher la pression dans la chambre de réaction (2) à la fin du processus.

26. Dispositif selon une des revendications précédentes, caractérisé par le fait
qu'une soupape (V1, V3) à commande manuelle ou électrique est associée à la chambre de réaction (2) aux fins de relâcher la pression avant l'ouverture de la chambre de réaction (2).
